# EUROPEAN PATENT APPLICATION

(11) **EP 2 629 224 A1**
(43) Date of publication of application: **21.08.2013**
(21) Application number: 13155640.9
(22) Date of filing: 18.02.2013
(51) Int. Cl.: G06F 21/10

(54) **Method and apparatus for outputting content in portable terminal supporting secure execution environment**

(30) Priority: 16.02.2012 KR 20120016086
(71) Applicant: Samsung Electronics Co., Ltd, Gyeonggi-do 443-742 (KR)
(72) Inventor: Lee, Seungbum, 443-742 Gyeonggi-do (KR); Kim, Suhyung, 443-742 Gyeonggi-do (KR)
(74) Representative: Nederlandsch Octrooibureau

(57) **Abstract**

A method and an apparatus for supporting internal and external outputs by synchronizing a user interface such as caption with a protected image in a portable terminal supporting a secure execution environment are provided. The method includes detecting the output of the content, managing the output of the content in a secure area according to a type of the content, providing a user interface with respect to the content in a general area, synchronizing the user interface with the content, and composing and outputting the content and the user interface.

## Description

### BACKGROUND OF THE INVENTION

### 1. Field of the Invention:

The present invention relates to a method and an apparatus for synchronizing a user interface with an image in a portable terminal. More particularly, the present invention relates to a method capable of supporting internal and external outputs by synchronizing a user interface such as caption with a protected image in a portable terminal supporting a secure execution environment, and an apparatus thereof.

### 2. Description of the Related Art:

In recent years, with the development of digital technology, various portable terminals such as a mobile communication terminal, a Personal Digital Assistant (PDA), an electronic note, a smart phone, a tablet Personal Computer (PC),and the like capable of processing communication and personal information while a user is moving have been introduced. The portable terminal may have various functions such as transmission of a message such as Short Message Service (SMS)/Multimedia Message Service (MMS), image call, electronic note-taking, photography, e-mail communication, broadcasting playback, moving image playback, Internet communication, enabling electronic commercial transaction, music playback, schedule management, Social Networking Service (SNS), messenger communications, providing a user with a dictionary, and game playing.

Meanwhile, an important security issue associated with the portable terminal is to protect portable terminals as well as a computing system processing information from hacking danger. To this end, various research and studies have focused on providing a secure execution environment relation field. The secure execution environment is directed at increasing secure level of an execution environment in a portable terminal. Such a secure execution environment increase stability of the portable terminal, and may be used simultaneously with other secure technology. TrustZone suggested by ARM Holdings Ltd. is a representative technology associated with the secure execution environment.

The TrustZone has suggested a security structure intended for an embedded processor applied to a device such as a portable terminal. A function associated with the security structure suggested by TrustZone is implemented by a processor, and classifies an operation mode of the processor into a normal mode and a secure mode. Accordingly, the user may realize security-related benefits by virtue of being able to separately operate a security related application and a general application in a single processor.

Recently, research into the secure execution environment in consideration of characteristics of a portable terminal having restrictive consumption characteristic of resource and power has been actively performed. There is a need for an approach capable of supporting convenience of a user while basically improving a secure level of the portable terminal.

Therefore, a need exists for an apparatus and method for composing image data in a secure mode and a user interface in a normal mode in a portable terminal supporting a secure execution environment to output the composed data.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above problems and/or disadvantages and to provide at least the advantages described below. Aspects of the invention are defined in the independent claims. The dependent claims define advantageous embodiments. Accordingly, an aspect of the present invention is to provide a method of composing image data in a secure mode and a user interface in a normal mode in a portable terminal supporting a secure execution environment to output the composed data, and an apparatus thereof.

Another aspect of the present invention further provides a method capable of synchronizing a user interface (caption, On-Screen-Display (OSD), user input information) provided in a normal mode with image data protected in a secure mode with upon external transfer of the image data in a portable terminal supporting a secure execution environment to simultaneously provide the image data and the user interface, and an apparatus thereof.

Another aspect of the present invention further provides a method capable of improving convenience of a user, usability and competitive force of a portable terminal supporting a secure execution environment by implementing an optimal environment for composing image data protected in a secure mode of the portable terminal and a user interface of a normal mode to output the combined data.

In accordance with an aspect of the present invention, a method of outputting content in a portable terminal supporting a secure execution environment is provided. The method includes detecting the output of the content, managing the output of the content in a secure area according to a type of the content, providing a user interface with respect to the content in a general area, synchronizing the user interface with the content, and composing and outputting the content and the user interface.

In accordance with another aspect of the present invention, a non-transitory computer-readable recording medium storing a program thereon is provided. The program includes at least one instruction that when executed by at least one processor performs a method that includes supporting an operation mode divided into a secure mode and a general mode using one processor, and synchronizing and composing content processed in a secure area and a user interface processed in a general area to support internal or external output.

In accordance with another aspect of the present invention, a portable terminal for supporting a secure execution environment is provided. The portable terminal includes a processor for processing internal output and external output of content processed in a protection area and a user interface processed in a general area according to conversion of an operation mode between a secure mode and a general mode, an image processor for processing a signal for displaying the content, a display for displaying an image of the content, and for displaying the user interface to be overlaid on the image, a composer for synchronizing and for composing the image of the content processed in the secure area and the user interface processed in the general area for external output of the image of the content and the user interface, and a communication unit for outputting the content processed by the image processor and the composed data from the composer.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic diagram illustrating a configuration of a system for describing an operation according to an exemplary embodiment of the present invention;

FIG. 2 is a block diagram schematically illustrating a configuration of a portable terminal according to an exemplary embodiment of the present invention;

FIG. 3 is a diagram illustrating an example of hardware architecture of a portable terminal according to an exemplary embodiment of the present invention;

FIG. 4 is a flowchart illustrating a method of outputting content in a portable terminal according to an exemplary embodiment of the present invention;

FIG. 5 is a flowchart illustrating an internal output method of content and a user interface in a portable terminal according to an exemplary embodiment of the present invention; and

FIG. 6 is a flowchart illustrating an external output method of content and a user interface in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relates to a portable terminal supporting a secure execution environment and a method of operating functions therein. Particularly, the portable terminal supporting the secure execution environment according to an exemplary embodiment of the present invention supports an operation mode which is classified into a security mode and a normal mode (non-security mode). The portable terminal may synchronize a user interface managed in the normal mode with an image protected in the security mode to support internal output and external output. According to exemplary embodiments of the present invention, the user interface includes screen interfaces of all forms such as a caption with played image, On-Screen-Display (OSD) information, and user input information capable of being composing with an image.

Meanwhile, the secure execution environment refers to an execution environment of a stable computing system, and is applicable to various types of portable terminals such as a computer system having a processor. Exemplary embodiments of the present invention illustrate an operation based on TrustZone among technologies associated with the secure execution environment. For example, according to exemplary embodiments of the present invention, the TrustZone indicates an example of a secure structure intended for an embedded processor applied to a device such as a portable terminal. A function associated with the TrustZone is implemented by a processor, and an operation mode of the processor is classified into a normal mode and a security mode. For example, according to exemplary embodiments of the present invention, two separated execution environments including a normal execution environment and a secure execution environment are provided by one processor, and execution of a main program directly connected to security of a system and execution of a normal program are logically and separately operated.

According to exemplary embodiments of the present invention, a security Operating System (OS) (e.g., TrustZone OS (TZOS)) is executed in a security mode operated based on the TrustZone, and a security application is performed, and security data may be accessed according to the security application. A non-security OS (e.g., High Level OS (HLOS)) and a non-security application is provided in the normal mode. The HLOS is a general OS controlling an overall function of a portable terminal, and the non-security application may correspond to a general application. Access to security data protected in the security mode is blocked in the HLOS and the non-security application operated in the normal mode. Security may be further reinforced by blocking access to data protected in the security mode in the normal mode. According to exemplary embodiments of the present invention, the security mode and the normal mode are classified by a secure area and a normal area (non-secure area), and may be supported by a security processing architecture to which TrustZone of ARM Holdings Ltd. is applied.

Hereinafter, a configuration and an operation control method of a portable terminal according to the exemplary embodiment of the present invention will be described with reference to the accompanying drawings. The configuration of a portable terminal according to an exemplary embodiment of the present invention is not limited to the following description, but are applicable to various exemplary embodiments based on the exemplary embodiments described below. The description of exemplary embodiments of the present invention illustrates a hardware access method by way of example. However, because exemplary embodiments of the present invention include a technology applicable to both of hardware and software, exemplary embodiments of the present invention may include an access method based on software.

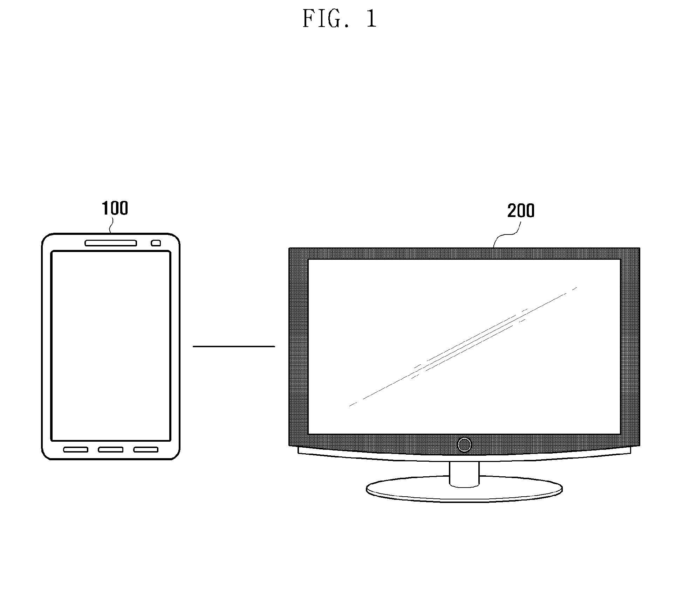

FIG. 1 is a schematic diagram illustrating a configuration of a system for describing an operation according to an exemplary embodiment of the present invention.

Referring to FIG. 1, a system according to exemplary embodiments of the present invention includes a portable terminal 100 and an external display 200. The exemplary embodiment of the present invention synchronizes the user interface with an image according to playback of content protected in the portable terminal 100 upon internal output and external output of the image to provide the synchronized image.

In particular, the portable terminal 100 synchronizes a user interface provided from a general area with an image of content provided in a secure area to process internal output so that the synchronized image is displayed through an internal display as one content. The portable terminal 100 synchronizes and composes a user interface provided from the general area with an image of content protected in the secure area to process external output so that the composed image may be displayed as one content through the external display 200 connected to the portable terminal 100 in one of a wired scheme or a wireless scheme.

The portable terminal 100 may transfer an image of content processed and protected in a protected area to an internal display upon the internal output, and may express a layer of the user interface process in a general area to be overlaid with a layer of an image displayed through the internal device. For example, when outputting the image and the user interface through the internal display, the portable terminal 100 may render respective overlaid screens in separate areas (e.g., a secure area and a general area). In detail, the portable terminal 100 renders a screen of content (e.g., image of the content) in the secure area, and renders the other screen (user interface screen) in the general area. The portable terminal 100 may display the user interface to be overlaid on the image of the content after synchronizing the user interface with the image of the content. Accordingly, a hacking program (or other malware) executed in the general area may be provided associated with a user interface based on a user while the content is protected from hacking so that access to the content is impossible.

As described above, when the portable terminal 100 operates in the general mode or the security mode by a processor implemented by the TrustZone, because the image is managed as content protected in the security mode upon external output of the image of the content in the security mode, the user interface may not be composed with the content in a general scheme. Accordingly, the portable terminal 100 according to exemplary embodiments of the present invention may include a configuration which composes an image protected in the security mode and a user interface managed in the general mode to output the combined image to the outside upon internal or external output with respect to the protected image.

The portable terminal 100 may synchronize and compose the user interface processed in a general area with an image (including sound) of content processed and protected in a protected area upon the external output to generate one data, and transfer the combined data to the external device 200 in a wired scheme or a wireless scheme so that content having the composed image (including sound) and user interface may be displayed. That is, when the image and the user interface are output through the external display 200, the portable terminal 100 may render the respective screens in separate areas (secure area and general area) as illustrated above. The portable terminal 100 may compose the image of the content and the user interface after synchronizing the user interface with the image of the content to output the composed data to the outside. Accordingly, the hacking program executed in the general area may be provided associated with a user interface based on a user while the content is protected from hacking so that access to the content is impossible. In this case, when outputting the combined data in a wireless scheme, the portable terminal 100 may further perform encoding for data transmission corresponding to a communication protocol of the wireless scheme.

The external display 200 plays content (e.g., an image and a voice) input from the outside (e.g., portable terminal 100) or content which is internally stored. To this end, the external display 200 may include a display module (not shown) capable of displaying the image and a voice output module (not shown) outputting a voice. The display module may display image data using a display panel in various display schemes such as a Liquid Crystal Display (LCD), a Plasma Display Panel (PDP), an Electro Luminescent Display (ELD), and a Vacuum Fluorescent Display (VFD), and the like.

The external display 200 includes a tuner (not shown), and may convert content according to a received signal input through the tuner into a playable format, and output the converted content. For example, the external display 200 may be a digital TV for receiving and displaying digital broadcasting, and the digital broadcasting uses a scheme of compressing an image signal and a voice signal to transmit the compressed signals. The external display 200 has a network interface accessible to a network, receives allocation of an Internet Protocol (IP) and receives and processes a data packet through the network, and the data packet may include image and voice data corresponding to content to be played.

According to an exemplary embodiment of the present invention, the external display 200 may connect with the portable terminal 100 using a wired/wireless network and may transceive content data using the connected network. For example, when the user wants to view content by the external display 200, which is played by the portable terminal 100, the portable terminal 100 transmits data of the content to the external display 200 using the wired/wireless network, and the external display 200 may display the content using data received from the portable terminal 100.

According to an exemplary embodiment of the present invention, the portable terminal 100 and the external display 200 may transceive a signal using the wireless network. For example, the portable terminal 100 and the external display 200 may transmit the content data using wireless communication protocols such as WiHD (Wireless HD), WHDi (Wireless Home Digital Interface) or Wi-Fi. Because the WiHD uses a frequency band of 60GHz and transceives data at transmission speed of 4Gbps, transmission is possible without compressing HD image data of 1080p(1920×1080). The WHDi may transceive the data at transmission speed of about 1.8Gbps using a frequency band of about 5GHz. The Wi-Fi may transceive data at transmission speed of 54Mbp using a frequency band of 2.4GHz. According to exemplary embodiments of the present invention, the portable terminal 100 and the external display 200 may transceive a signal in a wireless scheme using communication protocols such as various near field wireless communication protocols, for example, Bluetooth, ZigBee, or binary Code Division Multiple Access (CDMA) as well as the wireless communication protocols described above.

According to exemplary embodiments of the present invention, the portable terminal 100 and the external display 200 may transceive the signal using the wired network. For example, the portable terminal 100 and the external display 200 may transmit the content data using a wired communication protocol such as High-Definition Multimedia Interface (HDMI). The HDMI indicates a scheme of simultaneously transferring a digital image and a digital sound signal to one cable (e.g., HDMI cable).

Meanwhile, the portable terminal 100 displays an image corresponding to user selection using an internal display or outputs the image to the external display 200 as illustrated above. According to exemplary embodiments of the present invention, the portable terminal supports the secure execution environment, and includes a processor in which TrustZone is implemented, and may be operated in an operation mode which is classified into a security mode and a normal mode. For example, the portable terminal 100 provides two separate execution environments including a normal execution environment and a secure execution environment by one processor.

In the meantime, upon output of the image through the internal display, the portable terminal 100 may compose the image and UI corresponding to user selection, and display content having the composed user interface and image through a display. According to exemplary embodiments of the present invention, the user interface may include a caption of an image, user input information (e.g., text, images, and the like) according to user interrupt, and a control icon (e.g., OSD) for operating a function associated with playback of an image in the portable terminal 100.

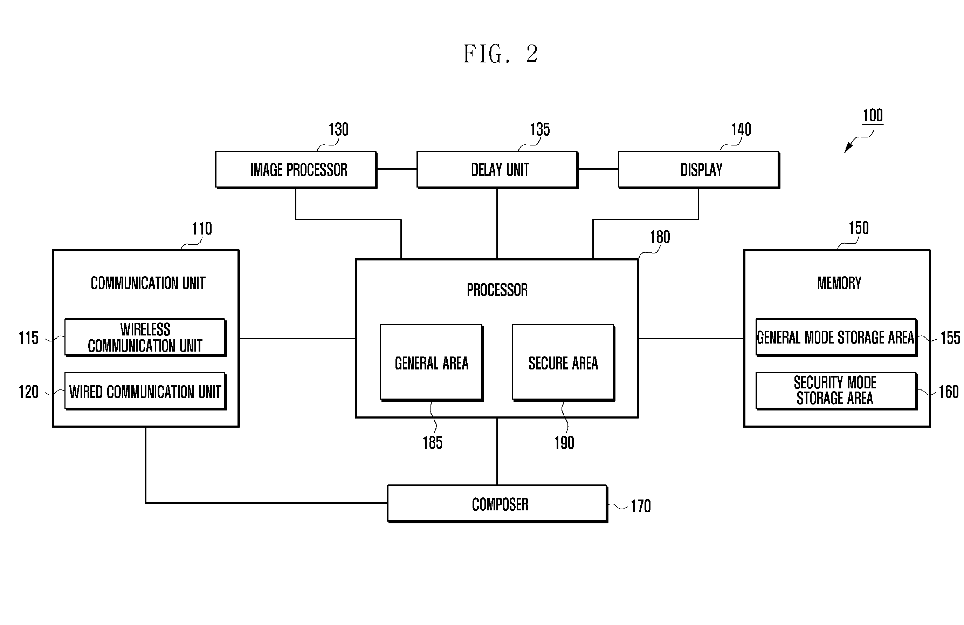

FIG. 2 is a block diagram schematically illustrating a configuration of a portable terminal according to an exemplary embodiment of the present invention.

Referring to FIG. 2, the portable terminal 100 includes a communication unit 110, an image processor 130, a delay unit 135, a display 140, a memory 150, a composer 170, and a processor 180. In addition, the portable terminal 100 may further include an audio processor having a microphone and a speaker, a digital broadcasting module for receiving digital broadcasting (e.g., Digital Multimedia Broadcasting (DMB) or Digital Video Broadcasting (DVB)), a camera module for shooting a still image and a moving image of the subject, at least one near field communication module based on near field wireless communication such as Infrared Data Association (IrDA) communication, Radio Frequency Identification (RFID) communication, Near Field Communication (NFC), an input unit for supporting input based on a hard key, a wireless communication unit for supporting communication functions such as a voice call, an image call, and a data call based on mobile communication, a vibration generator for generating vibration, and a battery for supplying power the foregoing constituent elements, but a detailed description and drawing thereof are omitted.

The communication unit 110 may form a data communication channel with an external device (e.g., external display 200, or another portable terminal) according to an engaged interface, and transmit an image signal and a voice signal through the data communication channel. The communication unit 110 may include a wireless communication unit 115 and a wired communication unit 120 for supporting communication according to a connection scheme (e.g., wireless communication or wired communication) for data communication with the external display 200.

The wireless communication unit 115 may transceive the content data using wireless communication protocols such as WiHD, WHDi, or Wi-Fi as described above. The wired communication unit 120 may transceive the content data using a wired communication protocol such as HDMI as described above.

The image processor 130 processes an image signal of content so that the image signal may be displayed through the display 140. The image processor 130 decodes content read from the memory 150 and transfers a resultant image to the processor 180 or the display 140. According to exemplary embodiments of the present invention, the image processor 130 may separately process an image signal managed in a general area and an image signal managed in the secure area according to control of each OS. The image processor 130 may provide an image signal processed according to control of the processor 180 to the communication unit 110 or the composer 170. The image processor 130 of the present invention may further include an audio processor processing and outputting an audio signal of the content, but a configuration and a description thereof are omitted.

The delay unit 135 applies an offset value according to a delay time computed by the processor 180 to the processed image signal in order to synchronize the user interface with the image signal processed by the image processor 130. For example, the processor 180 confirms display times of the image signal and a user interface and sets a delay time according to a difference of the confirmed display times (e.g., a delay time difference with respect to output times of the image signal and the user interface) to an offset value. The processor 180 applies the computed offset value to an image signal to delay an output time of the image signal to the display 140 so that the image signal and the user interface are displayed after synchronizing the user interface with the image signal. Accordingly, the delay unit 135 may delay the image signal under control of the processor 180, according to an offset value received from the processor 180, and transfer the delayed image signal to the display 140. According to exemplary embodiments of the present invention, the delay unit 135 may be included in the image processor 130. In this case, a configuration of the delay unit 135 may be omitted.

The display 140 may display an operation state of the portable terminal 100 and a screen associated therewith. For example, the display 140 may display a lock screen, a home screen, a menu screen, a message creation screen, a chatting screen, an image playback screen of the portable terminal 100, and respective execution screens according to execution of various applications. The display 140 displays information input by the user and information provided to the user as well as various menus of the portable terminal 100. For example, the display 140 may provide execution screens of various user functions according to use of the portable terminal 100. The display 140 may generally use an LCD, but may use other displays such as a Light Emitting Diode (LED), an Organic LED (OLED), and an Active Matrix OLED (AMOLED). The display 140 may be implemented by a flexible display. The flexible display indicates a display which may be bent or rolled without damage through a thin flexible substrate like a paper. When displaying various screens as illustrated above, the display 140 may support screen display in a landscape mode, screen display in a portrait mode according to a rotation direction (or put direction) of the portable terminal 100, and adaptive screen conversion display according to change between the landscape mode and the portrait mode. In particular, the display 140 may display an execution screen of an application provided under control of the processor 180 in an operation mode corresponding to the security mode or the general mode of the portable terminal 100. The display 140 may display a composed image of image data and the user interface.

Particularly, the display 140 according to the exemplary embodiment of the present invention may display a screen of the user interface processed in the general mode to be overlaid on a screen of the image signal processed by the image processor 130 in the security mode. To this end, the screen of the image signal may be rendered at a frame buffer of the secure area, and the screen of the user interface may be rendered at a frame buffer of the general area. For example, the image managed in the secure area of the processor 180 may be used or accessed in only a protected area, but not used and accessed in the general area. Accordingly, a security set image may be protected from access by a hacking program executed in the general area.

The memory 150 stores various applications and data operated by the portable terminal 100, and may include at least one non-volatile memory and a volatile memory. The memory 150 may include at least one of external storage media such as a Read Only Memory (ROM), a flash memory, a Random Access Memory (RAM), an internal Hard Disk (HDD), an external Hard Disk, and a memory card. The memory 150 may continuously or temporarily store an OS of the portable terminal 100, programs and data associated with an operation mode operation in the security mode and the general mode, programs and data associated with playback of an image, and programs and data associated with composing of the image and the user interface (e.g., caption, OSD) and external output thereof. The memory 150 may include a general mode storage area 155 storing data processed in the general mode and a security mode storage area 160 storing protected data processed in the security mode. The general mode storage area 155 may chiefly include a program area and a data area. The program area may store an OS for booting the portable terminal 100 and for operating respect constituent elements in a general mode, and downloaded and installed application programs in the general mode. The program area may store a hacking program (or other malware) regardless of intention of the user. The hacking program is executed in the general area. Accordingly, content may be illegally decrypted by a hacking program in the general area. However, because the portable terminal 100 receives and processes the image signal from the secure area, the content may be protected from attack of a hacking program executed in only the general area.

The data area stores data generated according to use of the portable terminal 100. Particularly, according to exemplary embodiments of the present invention, the data area stores data used or generated according to an executed application. For example, the data area may buffer or store image data and a user interface selected upon playback or external output. For example, the data area may temporarily store data requiring security setting, and be managed by a processor 180 in the security mode and may be moved to the security mode storage area 160 to be managed. In the meantime, a security attribute may be set to the data area according to the exemplary embodiment of the present invention. If the data area is set as 'security', the processor 180 may access only the secure area.

The security mode storage area 160 may include a secure ROM 321 and a secure RAM 323 to be described below. The security mode storage area 160 may be mounted to be separated in a hardware or software scheme. The security mode storage area 160 stores an OS for a security mode, security application program related information, and data requiring security upon execution of an application. When a processor 180 operating in the general mode accesses the security mode storage area 160, access of the security mode storage area 160 is physically separated. According to exemplary embodiments of the present invention, the security mode storage area 160 stores image data played in the security mode or protected image data in which external output is requested. The security mode storage area 160 may store a decoding key with respect to content requiring security from an external hacking. Upon playback of an encrypted content, a decoding key with respect to the content is called from the security mode storage area 160, the content is decrypted based on the decoding key, and the decrypted data are protected and stored in the security mode storage area 160. The security storage area 160 may further store a monitor program supporting conversion between the secure area and the general area as will be described.

The composer 170 synchronizes and composes a user interface provided in the general area with an image of content protected in the secure area, and transfers the composed data to the communication unit 110.

The composer 170 may transfer the composed data to a wireless communication unit 115 for external output in a wireless scheme or a wired communication unit 120 for external output in a wired scheme under control of the processor 180. According to exemplary embodiments of the present invention, upon external output by composing of the image of the content for the external output and the user interface, the composer 170 is operated under control of the processor 180, synchronization of the user interface with the image is achieved, the image and the user interface are composed as one data, and the one data is output to the communication unit 110.

The processor 180 controls an overall operation of the portable terminal 100. The processor 180 controls an operation through conversion between the security mode and the general mode. In particular, the processor 180 is a processor in which TrustZone is implemented, and may be operated by a processor having two separate operated software, which is called virtualization. Through the virtualization, the user may separately operate a security related application and a general application on the single processor 180.

The processor 180 provides a security technology of a chip level intended for peripheral devices such as a communication unit 110, an image processor 130, a delay unit 135, a display 140, a memory 150, and a composer 170 in order to ensure stability of the portable terminal 100. To this end, the processor 180 classifies two separated execution environments having a general execution environment and a security execution environment, and logically and separately operates execution of a main program directly connected to security of the portable terminal 100 and execution of a general program. In this case, according to exemplary embodiments of the present invention, the logical division is applicable to the foregoing peripheral devices as well as the processor 180. The logical division of the execution environment may protect execution of a program and a resource of a system which is directly connected to security from malicious user or danger of a program.

The processor 180 provides a hardware function such as separation of an operation mode according to the security mode and the general mode; supporting of a single secure bit on a bus capable of transferring the operation mode to a peripheral device; supporting of an Secure Mode Interrupt (SMI) for managing interrupt and exception, Secure Status Register, and Secure Vector Table (SVT); separation of Memory Management Unit (MMU) and Translation Lookaside Buffer (TLB) for logical division of a cache and a memory, and a state track function. In particular, the processor 180 may provide the general area 185 and the secure area 190, and may logically and separately achieve control based on an HLOS in the general area 185 and control based on a TZOS.

The processor 180 may process an overall function of the portable terminal 100 according to a general execution environment in the general area by the HLOS, and access to the application and the data processed in the secure area 190 is blocked. The processor 180 may provide a user interface composed with an image of content protected and protected in the secure area 190 upon internal or external output of the image.

The processor 180 processes a function of the portable terminal 100 according a surety execution environment in the secure area 190 by the TZOS. The processor 180 may manage transfer of an image of content processed and protected in the secure area 190 to the display 140, to the composer 170, and to the communication unit 110.

Particularly, according to exemplary embodiments of the present invention, the processor 180 may control an overall operation such that the general area 185 and the secure area 190 are logically separated, and internal output by the display 140 is achieved by overlaying a user interface provided in the general area 185 with an image processed and provided in the secure area 190. The processor 180 may compute an offset value according to a delay time difference to synchronize the user interface in the general area 185 with the image in the secure area 190 to delay output of the image upon internal output of the image and the user interface.

According to exemplary embodiments of the present invention, the processor 180 may output an image processed and provided in the secure area 190 in a wired scheme or a wireless scheme through a communication unit 110. Particularly, when external output by composing the image processed in the secure area 190 and the user interface processed in the general area 185 is requested, the composer 170 synchronizes and composes the image and the user interface, and the processor 180 may control a series of operations to transfer the composed data to the communication unit 110. When external output in a wireless scheme is supported, the processor 180 may process encoding in a scheme corresponding to a protocol of a communication scheme in which the composed data are performed. The encoding may be performed by the wireless communication unit 115.

According to exemplary embodiments of the present invention, when internal or external output with respect to the image and the user interface is controlled, the processor 180 may achieve adaptive switching between an HLOS of the general area 185 and a TZOS of the secure area 190. To this end, the processor 180 may include a TrustZone monitor. The TrustZone monitor may perform schedule and execution in function switch between the general area 185 and the secure area 190 in a time sliding scheme by performing a monitor program. The monitor program may be stored in the security mode storage area 160. If a request of internal output or external output of content is received in the general area 185, the TrustZone monitor converts the general mode 185 into the secure area 190, and processes internal output according to playback of content in the secure area 190 or external output of the content. If an input request of the user interface is received in the general area 185 upon management by the secure area 190, the TrustZone monitor converts the secure area 190 into the general area 185. After processing input of the user interface in the general area 185, the TrustZone monitor again converts the general area 185 into the secure area 190, and performs a relation operation such as synchronization and composing between the image and the user interface in the secure area 190.

The processor 180 may determine security attributes of peripheral devices of the portable terminal 100 according to a general execution environment and a security execution environment. For example, when a general execution environment of HLOS into a security execution environment of the TZOS, peripheral devices of the portable terminal 100 operated under control of the general area 185 according to the general execution environment based on the HLOS may be operated under control of the secure area 190 according to the security execution environment.

As described above, the processor 180 may control an overall operation with respect to a function of the present invention. A detailed control operation of the processor 180 will be described in an example of an operation of the portable terminal 100 and a control method thereof with reference to following drawings. The processor 180 may perform various operations associated with a typical function of the portable terminal in addition to the foregoing function. For example, the processor 180 may control an operation of a specific application and screen display thereof when executing the specific application. The processor 180 may control a corresponding function operation in response to a touch event input through a touch based input interface. The processor 180 may control communication of various data based on wired communication or wireless communication.

According to exemplary embodiments of the present invention, the portable terminal 100 of the present invention shown in FIGs. 1 and 2 may include various information communication devices, multi-media devices having a security structure intended for an embedded processor and application devices thereof. For example, the portable terminal includes devices such as Personal Computer (PC), Smart Phone, digital camera, Portable Multimedia Player (PMP), media player, portable game terminal, Personal Digital Assistant (PDA) as well as mobile communication terminals operating based on respective communication protocols corresponding to various communication systems. In addition, the method according to exemplary embodiments of the present invention may be applied to various devices such as a Digital Television (TV), a Digital Signage (DS), a Large Format Display (LFD), a laptop computer, a media pole,and the like, and may be operated.

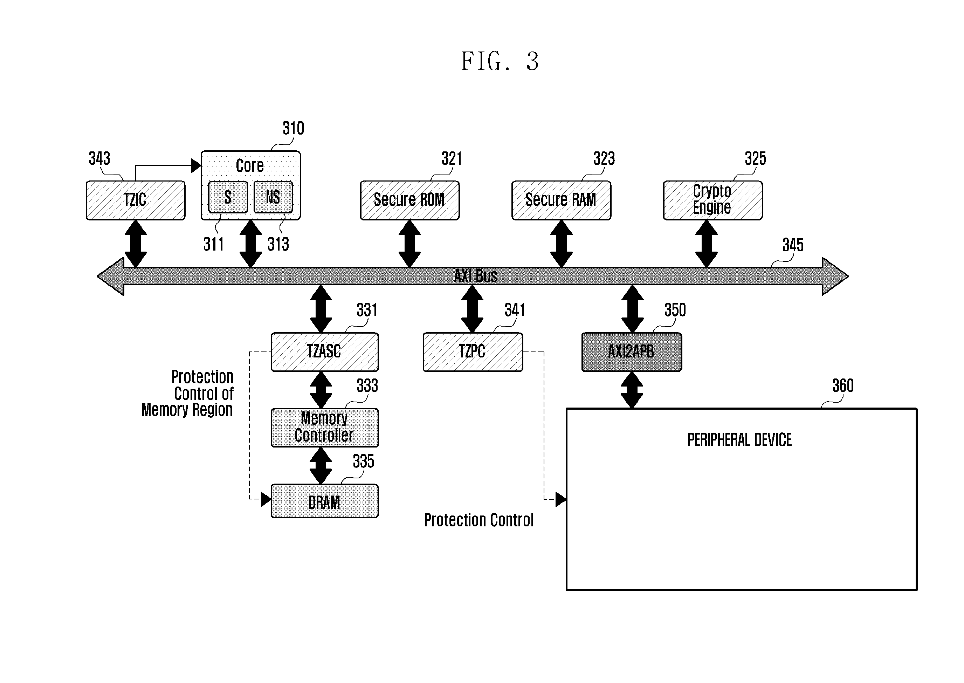

FIG. 3 is a diagram illustrating an example of hardware architecture of a portable terminal 100 according to an exemplary embodiment of the present invention.

Referring to FIG. 3, the hardware architecture according to the exemplary embodiment of the present invention includes a System on Chip (SoC) having TrustZone architecture of ARM Holdings Ltd. and peripheral devices connected to the SoC.

The SoC includes a core processor 310, a secure ROM 321, a secure RAM 323, a crypto engine 325, a TrustZone Address Space Controller (TZASC) 331, a memory controller 333, a dynamic RAM (DRAM) 335, a TrustZone Protection Controller (TZPC) 341, and a TrustZone Interrupt Controller (TZIC) 343. Each constituent element of the SoC is connected to a system bus, for example, Advanced extensible Interface (AXI) bus 345, so that they achieve data communication therebetween.

The core processor 310 provides an application program execution environment which is divided into the secure area 190 and the general area 185. To this end, the core processor 310 includes a secure core processor (S) 311 and a non-secure core processor (NS) 313. The secure core processor 311 is a virtual processor and provides a secure area 190. The non-secure core processor 313 is a virtual processor and provides the general area 185. The secure ROM 312 and a secure RAM 323 are separated from each other in hardware and software schemes. The secure ROM 321 and the secure RAM 323 store an OS (e.g., TZOS) and secure application programs of the secure area 190, and data according to execution thereof.

An encryption engine 325 performs encryption logic and processing including an encryption algorithm.

The TZACS 331 controls a memory area, particularly, a DRAM 335. The TZASC 331 controls security with respect to a memory area having a specific address. For example, the TZASC 331 may set a security attribute of a specific area of the DRAM 335 as 'security'. Accordingly, when the non-secure core processor 313 accesses the secure area of the DRAM 335, the TZASC 331 rejects the access to the secure area. Meanwhile, the TZASC 331 supports the secure core processor 311 to access the secure area.

For example, the DRAM 335 according to an exemplary embodiment of the present invention includes a secure frame buffer and a non-secure frame buffer. Security of the secure frame buffer is set by the TZASC 331 so that the secure frame buffer may access the secure area 190. A non-secure application program may not access the secure frame buffer. Accordingly, exemplary embodiments of the present invention may not recognize a decoding key of content in which the non-secure program is rendered in the security frame buffer. A user interface displayed on a screen of content image may be rendered at a non-secure frame buffer of the DRAM 335 the security of which is not set.

The memory controller 333 moves data in the DRAM 335.

The TZPC 341 sets a secure attribute of a peripheral device 360 to control access from the core processor 310. In particular, the TZPC 341 according to an exemplary embodiment of the present invention may set security of the content. In this case, the security-set content may not access in the general area 185, and this will be described in a description of AXI to APB (AXI2APB) bridge 350.

The TZIC 343 sets a secure attribute of an interrupt line. In particular, the TZIC 343 according to an exemplary embodiment of the present invention sets security of a connected interrupt line for internal output and external output of content. For example, the user may generate an input for selecting content stored in the general mode storage area 155. As described above, when an input requesting playback according to selection of the content is generated, the TZIC 343 secures content corresponding to the selection. Accordingly, the secured content may be processed by the secure core processor 311. The TZIC 343 does not transfer a decoding key of content to be secured to the non-secure core processor 313. Accordingly, the non-secure core processor 313 may not recognize a decoding key with respect to content to be played (or external output) by the user, and the content and the decoding key may not be used by the hacking program.

Most peripheral devices 360 of the portable terminal 100 are connected to an Advanced Peripheral Bus (APB), and perform data communication. According to exemplary embodiments of the present invention, as described above, the peripheral device 360 may include a communication unit 110, an image processor 130, a display 140, a memory 150, and a composer 170.

Data communication between the SoC and the peripheral device 360 is achieved through the AXI2APB bridge 350. The AXI2APB bridge 350 may mediate each constituent elements of the SoC as described above to access to the peripheral device 360. The AXI2APB bridge 350 recognizes the peripheral device 360 in which security is set. Accordingly, when access from the general area 185 to the security-set peripheral device 360 is requested, the AXI2APB bridge 350 may reject access request from the general area 185. For example, the TZPC 341 may vary the secure attribute of the image processor 130 to set the security. The non-secure core processor 313 may transfer an access request for accessing to the image processor 130 to the AXI bus 345 by a hacking program. In response to the access request, the AXI2APB bridge 350 may receive the access request of the non-secure core processor 313, and may confirm a security attribute of the image processor 130. When the secure attribute of the image processor 130 is set to 'security', the AXI2APB bridge 350 may reject the access request. Accordingly, the AXI2APB bridge 350 may prevent the non-secure program from accessing the image processor 130 to hack signal processed information. Accordingly, the AXI2APB bridge 350 supports only the secure core processor 311 to request information to the image processor 130.

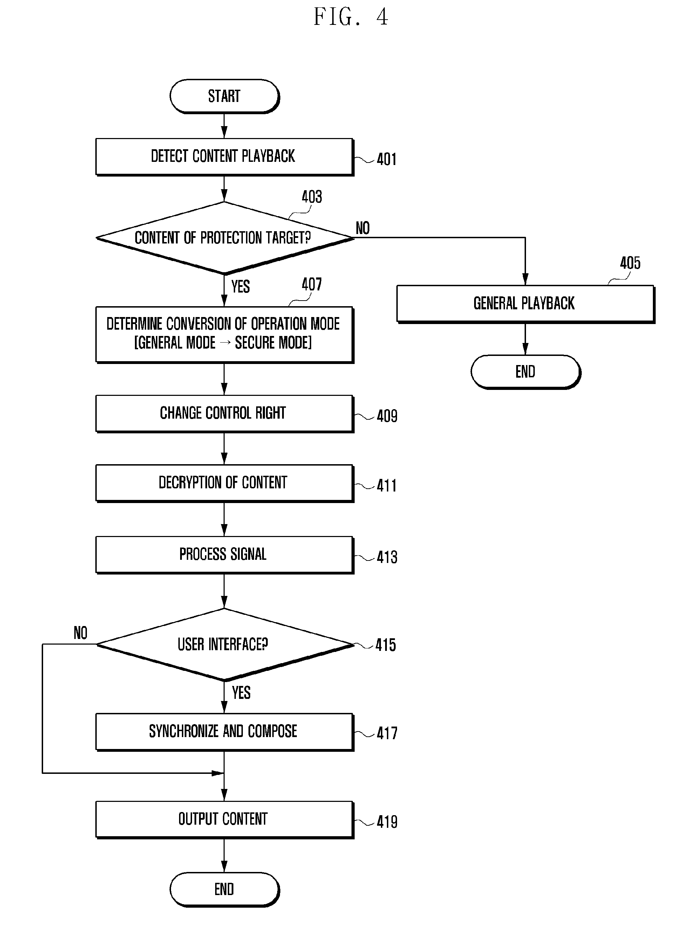

FIG. 4 is a flowchart illustrating a method of outputting content in a portable terminal according to an exemplary embodiment of the present invention.

Referring to FIG. 4, a processor 180 may detect content playback request in a general area 185 at step 401. For example, when an operation mode is a general mode and a user generates an interrupt for internal output or external output of content stored in a memory 150, the processor 180 may detect the interrupt in an HLOS of the general area 185.

Next, the processor 180 determines a type of the content to determine whether the requested content is content of a protection target at step 403. For example, the processor 180 may determine whether the content is a High Definition (HD) content supporting HD digital resolution (e.g., resolution of 1920*1080 or 1024*769) or a Standard Definition (SD) content supporting standard digital resolution (e.g., resolution of 720*480 or 640*480). The processor 180 may determine whether the content is content of a protection target according to whether the content is content which is encrypted in the HLOS and requires a decoding key. In this case, the processor 180 may determine whether an operation mode is converted from a general mode to a secure mode according to whether the requested content is the content of a protection target.

Next, if the requested content is not the content of the protection target (NO of step 403), the processor 180 may process a series of operations to playback (internal output or external output) with respect to the requested content based on the general execution environment in the general area 185 at step 405.

If the requested content is the content for a protection target (YES of step 403), the processor 180 may determine conversion of the operation mode from the general mode to the secure mode at step 407. When the operation mode is converted into the secure mode, the processor 180 may request playback with respect to the content to a TZOS of the secure area 190 in an HLOS of the general area 185 and change a control right with respect to the content at step 409. For example, the control right with respect to the content may be changed to a TZOS of the secure area 190 in an HLOS of the general area 185.

Subsequently, the processor 180 may perform decryption with respect to the content at step 411, and process a signal at step 413. Particularly, the processor 180 may perform decryption of the content and signal processing based on the TZOS of the secure area 190.

Next, the processor 180 may determine whether there is a user interface corresponding to the content at step 415. According to exemplary embodiments of the present invention, the user interface may include a caption, OSD, and user input information with respect to the content. When playback of the content is requested, the processor 180 may determine whether there is a user interface such as a caption selected together with the content, whether there is an OSD output with respect to the content, or whether predetermined information is input from a user. The determination with respect to the user interface may be achieved when the content is played by internal or external output.

Next, when there is no user interface (NO of step 415), the processor 180 may output the content in which a signal is processed at step 419. For example, the processor 180 transfers an image signal of the content to the internal display 140 based on a TZOS of the secure area 190 so that output of the image signal of the content may be controlled. The processor 180 transfers the image signal of the content to the communication unit 110 based on the TZOS of the secure area 190 so that external output of the image signal may be controlled. In this case, the processor 180 may control internal output or external output with respect to a sound signal of the content together with the image signal of the content.

In contrast, when there is the user interface (YES of step 415), the processor 180 synchronizes and composes the content and the user interface at step 417, and outputs the synchronized and composed content at step 419. For example, the processor 180 may process synchronization and composing by conversion between the TZOS of the secure area 190 and an HLOS of the general area 185. The processor 180 may differently apply a composing scheme according to a scheme (e.g., internal output, external output of wired scheme, external output of wireless scheme) to which the content and the user interface are output. For example, in a case of the internal output, the processor 180 may output and process the user interface to be overlaid with the content. In a case of the external output of the wired scheme, the processor 180 composes the content and the user interface to output one composed data. In a case of the external output of the wireless scheme, the processor 180 composes the content and the user interface to generate one composed data, encodes the composed data to be transmitted with an engaged communication protocol, and outputs the encoded data.

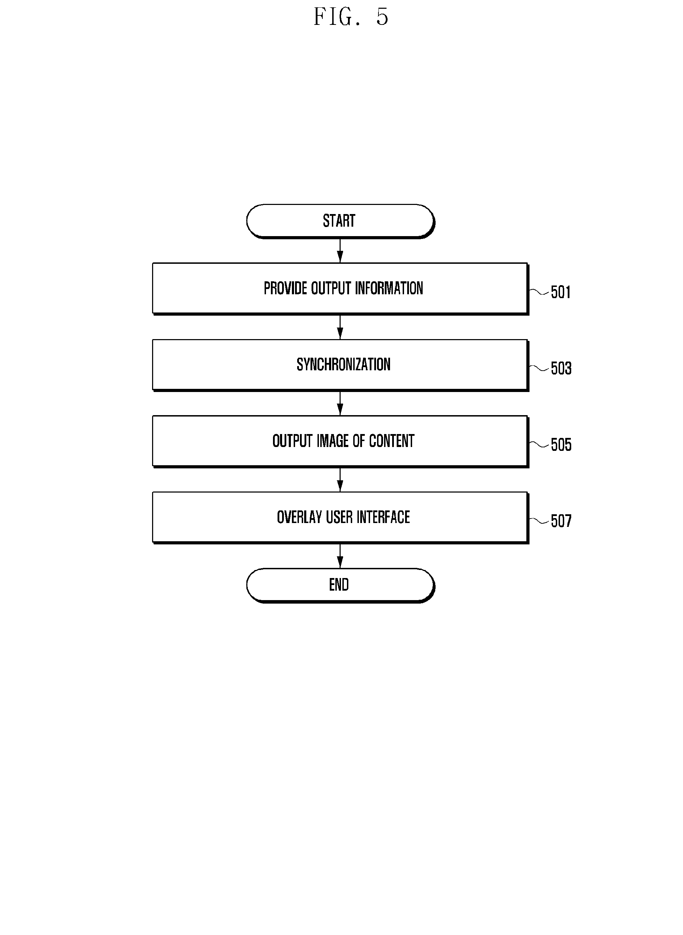

FIG. 5 is a flowchart illustrating an internal output method of content and a user interface in a portable terminal according to an exemplary embodiment of the present invention.FIG. 5 illustrates a synchronizing and composing operation when the content and the user interface the content and the user interface are internally output through the display 140 as described above with reference to FIG. 4.

Referring to FIG. 5, when there is a user interface with respect to the content in an internal output scheme, the processor 180 provides output information upon output of the image signal of the content to the display 140 at step 501. For example, the processor 180 may notify that an image signal of the content is provided to the display 140 in the TZOS of the secure area 190 to an HLOS of the general area 185.

Next, the processor 180 synchronizes a user interface with the content based on the output information at step 503. For example, the processor 180 may transfer a user interface (or playback information) of the general area 185 to a TZOS of the secure area 190 in response to the output information in the HLOS of the general area 185. Then, the processor 180 may compute a delay time for synchronizing the user interface with an image signal of the image processor 130 in the TZOS of the secure area 190, and apply an offset value according to the computed delay time to the image signal to achieve the synchronization. For example, the processor 180 confirms display times of an image signal and a user interface output from the image processor 130and may set a delay time according to a difference between the confirmed display times (e.g., a delay time difference with respect to output times of an image signal and a user interface) as an offset time. The processor 180 may apply the computed offset value to the image signal to delay a time to which the image signal is output to the display 140, thereby synchronizing the user interface with the image signal. Although FIG. 5 illustrates that synchronization is processed based on the TZOS of the secure area 190, the synchronization may be processed based on the HLOS of the general area 185.

Next, the processor 180 may output an image of content to the display 140 according to the offset value at step 505. The processor 180 may display the content based on the TZOS of the secure area 190.

Next, the processor 180 may output the user interface to be overlaid on the image of the content at step 507. The processor 180 may display the user interface processed based on the HLOS of the general area 185 to be overlaid with an image output on the display 140 based on the TZOS of the secure are 190. For example, the processor 180 may transfer the user interface to the display 140 with a layer other than a layer according to an image of the content.

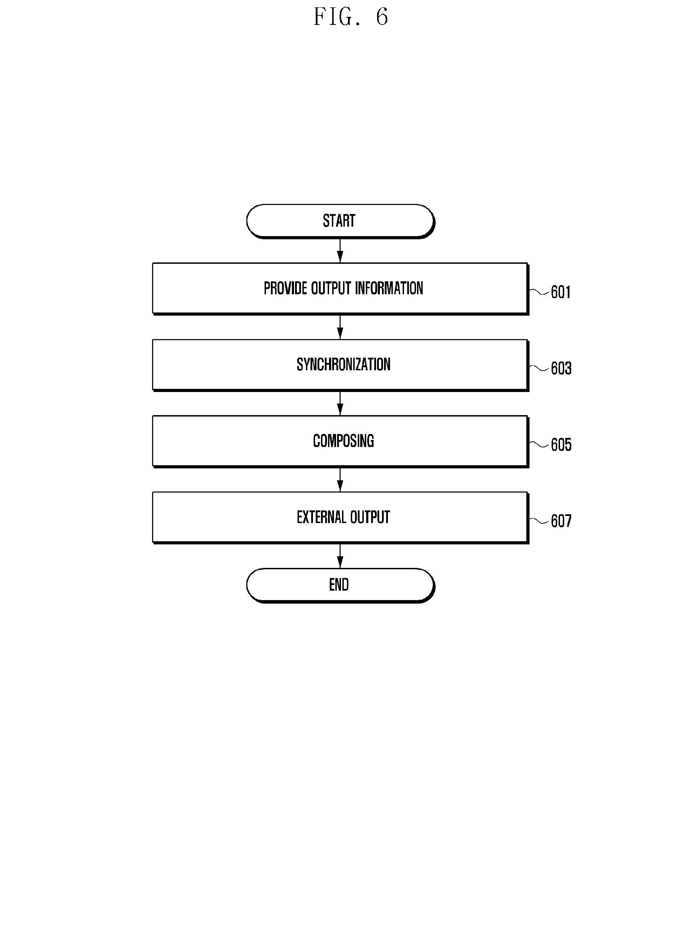

FIG. 6 is a flowchart illustrating an external output method of content and a user interface in a portable terminal according to an exemplary embodiment of the present invention.FIG. 6 illustrates synchronization and composing operations when the content and the user interface are output to the outside through a communication unit 110 as described above with reference to FIG. 4.

Referring to FIG. 6, when there is a user interface with respect to the content in an external output scheme, the processor 180 provides output information upon output of the image signal of the content to the display 140 at step 601. For example, the processor 180 may notify that an image signal of the content is provided to the display 140 in the TZOS of the secure area 190 to an HLOS of the general area 185.

Next, the processor 180 processes synchronization and composing of the user interface with the image signal of the content at steps603 and 605. For example, the processor 180 may transfer the user interface to the composer 190 in response to the output information in an HLOS of the general area 185. Then, the composer 170 synchronizes and composes the image of the content protected in the security area 190 and the user interface provided in the general area 185 under control of the processor 180, and transfers the composed data to the communication unit 110 under control of the processor 180. In this case, when the external output scheme is output by a wired scheme (e.g., HDMI), the composed data may be transferred to the wired communication unit 120. When the external output scheme is output by a wireless scheme (e.g., Wi-Fi), the composed data may be transferred to the wireless communication unit 115.

Next, the processor 180 may process external output of the composed data transferred to the communication unit 110 at step 607. For example, the processor 180 may process a series of procedures such that the composed data are transferred to an external display 200 through the wired communication unit 120 according to an external output scheme. The processor 180 may process a series of procedures such that the composed data are transferred to the external display 200 through the wireless communication unit according to the external output scheme.

The foregoing method for outputting content in a portable terminal supporting a secure execution environment according to exemplary embodiments of the present invention may be implemented in an executable program command form by various computer means and be recorded in a non-transitory computer readable recording medium. In this case, the computer readable recording medium may include a program command, a data file, and a data structure individually or a combination thereof. In the meantime, the program command recorded in a recording medium may be specially designed or configured for the present invention or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a compiler and a high-level language code executable by a computer using an interpreter. The foregoing hardware device may be configured to be operated as at least one software module to perform an operation of the present invention, and vice versa.

As described above, according to a method of outputting content in a portable terminal supporting a secure execution environment and an apparatus thereof, convenience of a user may be supported while basically improving a secure level of the portable terminal. According to exemplary embodiments of the present invention, a user interface (caption, OSD, user input information) provided in a normal mode may be synchronized with image data protected in a secure mode with upon external transfer of the image data in a portable terminal supporting a secure execution environment to simultaneously provide the image data and the user interface.

A method of outputting content in a portable terminal supporting a secure execution environment may be provided, the method comprising: detecting the output of the content; managing the output of the content in a secure area according to a type of the content; providing a user interface with respect to the content in a general area; synchronizing the user interface with the content; and composing and outputting the content and the user interface. The synchronizing of the user interface may comprise synchronizing the user interface provided in the general area with the content processed in the secure area according to an offset value determined according to a computed delay time. The composing and outputting of the content and the user interface may comprise: composing composed data according to the synchronized content and user interface so as to generate one composed data; and outputting the composed data via a communication unit. The composing and outputting of the content and the user interface may comprise: displaying the content on an internal display; and displaying the user interface to be overlaid on the content with which the user interface is synchronized.

A portable terminal for supporting a secure execution environment may be provided, the portable terminal comprising: a processor for processing internal output and external output of content processed in a protection area and a user interface processed in a general area according to conversion of an operation mode between a secure mode and a general mode; an image processor for processing a signal for displaying the content; a display for displaying an image of the content, and for displaying the user interface to be overlaid on the image; a composer for synchronizing and for composing the image of the content processed in the secure area and the user interface processed in the general area for external output of the image of the content and the user interface; and a communication unit for outputting the content processed by the image processor and the composed data from the composer. The portable terminal may comprise a delay unit for delaying a display time of the image processed by the image processor according to an offset value computed by the processor in order to synchronize the user interface with the content. The processor may be configured to determine a display time of the image output from the image processor and a display time of the user interface, to compute a delay time according to the display time of the image and the display time of the user interface as an offset value, and to apply the computed offset value to the image to delay an output time of the image to the display, thereby synchronizing the user interface with the content. The communication unit may comprise: a wireless communication unit for supporting external output in a wireless communication scheme; and a wired communication unit for supporting external output in a wired communication scheme. The composer may be configured to synchronize the user interface with the image, to compose composed data according to the synchronized image and the user interface so as to generate one composed data, and to transfer the one composed data to the wireless communication unit or the wired communication unit.

A non-transitory computer-readable recording medium may be configured to store a program thereon, the program comprising at least one instruction that when executed by at least one processor performs a method comprising: supporting an operation mode divided into a secure mode and a general mode using one processor; and synchronizing and composing content processed in a secure area and a user interface processed in a general area to support internal or external output. The supporting of the operation mode divided into the secure mode and the general mode using one processor and the synchronizing and composing of the content processed in the secure area and the user interface processed in the general area to support internal or external output may comprise: detecting the output of the content; managing the output of the content in a secure area according to a type of the content; providing a user interface with respect to the content in a general area; synchronizing the user interface with the content; and composing and outputting the content and the user interface. The synchronizing of the user interface may comprise synchronizing the user interface provided in the general area with the content processed in the secure area according to an offset value according to a computed delay time. The composing and outputting of the content and the user interface may comprise: composing composed data according to the synchronized content and user interface so as to generate one composed data; and outputting the composed data via a communication unit. The composing and outputting of the content and the user interface may comprise: displaying the synchronized content on an internal display; and displaying the user interface to be overlaid on the content with which the user interface is synchronized.

Exemplary embodiments of the present invention may be implemented in various types of portable terminals and various devices corresponding thereto. Exemplary embodiments of the present invention can improve convenience of a user, usability and competitive force of a portable terminal by implementing an optimal environment for composing image data protected in a secure mode of the portable terminal and a user interface of a normal mode to output the combined data.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of outputting content in a portable terminal supporting a secure execution environment, the method comprising:
detecting the output of the content;
controlling the output of the content in a security operating system;
providing a data to be displayed with respect to the content in a non-security operating system; and
composing the content and the data.

2. The method of claim 1, further comprising:
synchronizing the data with the content.

3. The method of claim 2, wherein the synchronizing of the data comprises synchronizing the data provided in the non-security operating system with the content processed in the security operating system according to an offset value.

4. The method of claim 3, wherein the synchronizing of the data comprises synchronizing the data with the content in the security operating system according to the offset value determined according to a computed delay time.

5. The method of claim 2, wherein the composing the content and the data comprises:
composing the synchronized content and data; and
outputting the composed data.

6. The method of claim 5, wherein the composing the content and the data comprises composing the data with the content in the security operating system.

7. The method of claim 5, wherein the outputting the composed data comprises:
outputting the composed data to a external output device connected to the portable terminal.

8. The method of claim 2, wherein the composing the content and the data comprises:
synchronizing the data provided from the non-security operating system with the content protected in the security operating system; and
outputting the synchronized data to an internal output device.

9. The method of claim 8, wherein the outputting the synchronized data comprises:
displaying the data to be overlaid on the content with which the data is synchronized on the internal output device.

10. A portable terminal for supporting a secure execution environment, the portable terminal comprising:
a processor for processing internal output and external output of content processed in a security operating system and a data processed in a non-security operating system according to conversion of an operation mode between a secure mode and a general mode;
an image processor for processing a signal for displaying the content;
a display for displaying an image of the content, and for displaying the data to be overlaid on the image;
a composer for synchronizing and for composing the image of the content processed in the security operating system and the data processed in the non-security operating system for external output of the image of the content and the data; and
a communication unit for outputting the content processed by the image processor and the composed data from the composer.

11. The portable terminal of claim 10, further comprising a delay unit for delaying a display time of the image processed by the image processor according to an offset value computed by the processor in order to synchronize the data with the content.

12. The portable terminal of claim 11, wherein the processor is configured to determine a display time of the image output from the image processor and a display time of the data, to compute a delay time according to the display time of the image and the display time of the data as an offset value, and to apply the computed offset value to the image to delay an output time of the image to the display, thereby synchronizing the data with the content.

13. The portable terminal of claim 10, wherein the communication unit comprises:
a wireless communication unit for supporting external output in a wireless communication scheme; and
a wired communication unit for supporting external output in a wired communication scheme.

14. The portable terminal of claim 13, wherein the composer is configured to synchronize the data with the image, to compose composed data according to the synchronized image and the data so as to generate one composed data, and to transfer the one composed data to the wireless communication unit or the wired communication unit.

15. A non-transitory computer-readable recording medium storing a program thereon, the program comprising at least one instruction that when executed by at least one processor performs a method comprising:
providing an operation mode divided into a secure mode and a general mode using one processor;
synchronizing and composing content processed in a security operating system to be executed in the security mode and a data processed in a non-security operating system to be executed in the general mode; and
outputting the content and the data to an internal or external output device.

16. The recording medium of claim 15, wherein the providing of the operation mode divided into the secure mode and the general mode using one processor, the synchronizing and composing of the content processed in the security operating system and the data processed in the non-security operating system, and the outputting the content and the data to the internal or external output device comprises:
detecting the output of the content;
controlling the output of the content in a security operating system;
providing a data to be displayed with respect to the content in a non-security operating system; and
composing the content and the data.

17. The recording medium of claim 16, wherein the synchronizing of the data comprises synchronizing the data provided in the non-security operating system with the content processed in the security operating system according to an offset value.

18. The recording medium of claim 17, wherein the composing and outputting of the content and the data comprises:
composing the synchronized content and data; and
outputting the composed data.

19. The recording medium of claim 15, wherein the outputting the content and the data comprises:
displaying the data to be overlaid on the content with which the data is synchronized on the internal output device

20. The recording medium of claim 15, wherein the outputting the content and the data comprises:
outputting the composed data to a external output device connected to the portable terminal.
